# EUROPEAN PATENT APPLICATION

(11) **EP 3 264 133 A1**
(43) Date of publication of application: **03.01.2018**
(21) Application number: 17178342.6
(22) Date of filing: 28.06.2017
(51) Int. Cl.: G01S 15/04, G01S 15/10, G01S 15/88, G08B 13/00

(54) **METHOD AND APPARATUS FOR SPACE STATUS DETECTION BASED ON ACOUSTIC CHIRP SIGNALS**

(30) Priority: 29.06.2016 US 201662355888 P; 23.05.2017 TW 106117034
(71) Applicant: Industrial Technology Research Institute, Chutung, Hsinchu 31040 (TW)
(72) Inventor: Lin, Chang-Hong, 310 Hsinchu County (TW); Chen, Ming-Yen, 900 Pingtung County (TW); Chi, Tai-Shih, 104 Taipei City (TW)
(74) Representative: Becker Kurig Straus

(57) **Abstract**

A method and an apparatus for space status detection based on acoustic chirp signals are provided. The method includes following steps. One of a plurality of acoustic chirp signals is transmitted into a space respectively at a plurality of different time points. A plurality of acoustic waves that are the transmitted acoustic chirp signals varied in the space are sequentially received to generate a plurality of acoustic spatial response signals, and a plurality of space features of the space are obtained based on the acoustic spatial response signals. A status change of the space is detected by comparing two of the space features.

## Description

### TECHNICAL FIELD

The disclosure relates to an apparatus for space status detection, and particularly relates to a method and an apparatus for space status detection based on acoustic chirp signals.

### BACKGROUND

Owing to the continuous development of science and technology and the increasing demands on living standards, smart home has become one of the main focuses of development in recent years. Taking home security and security care in the current applications of smart home as examples, potential events in a space may be determined with a sensing network and an analysis on sensed information, so as to perform monitoring for a security purpose.

In general, the hardware cost in a surveillance system is quite high, and the cost for purchasing such the hardware has been a major concern of the users. Thus, how to reduce the hardware cost of monitoring/detecting apparatuses has become an important issue in the technical development of relevant fields.

In addition, since the real world environment is filled with ambient noises, such as broadband sound signals or signals varied with time), a space status detection technique that requires to build an initial space model with acoustic waves may be time consuming, and results of detection may be compromised because background noises may be mixed in signals measured. Thus, how to take interferences of ambient noises into consideration is also a concern.

### SUMMARY

The disclosure provides a method and an apparatus for space status detection based on acoustic chirp signals. The method and the apparatus are capable of reducing a cost for detection apparatus, mitigating the problems of signal blind angle and signal transceiving directivity and reducing a correlation between acoustic spatial responses and background noises.

A method for space status detection based on acoustic chirp signals according to an embodiment of the disclosure includes steps as follows. One of a plurality of acoustic chirp signals is transmitted into a space at a plurality of different time points respectively. A plurality of acoustic waves that are the transmitted acoustic chirp signals varied in the space are sequentially received to generate a plurality of acoustic spatial response signals, and a plurality of space features of the space are obtained based on the acoustic spatial response signals. A status change of the space is detected by comparing two of the space features.

An apparatus for space status detection based on acoustic chirp signals according to an embodiment of the disclosure includes a receiving device, a space feature generator, and a determiner. The receiving device sequentially receives a plurality of acoustic waves that are a plurality of acoustic chirp signals varied in a space to generate a plurality of acoustic spatial response signals. The respective acoustic chirp signals are respectively transmitted into the space at a plurality of different time points. The space feature generator is coupled to the receiving device to receive the acoustic spatial response signals and calculates a plurality of space features of the space based on the acoustic spatial response signals. The determiner is coupled to the space feature generator to receive the space features and detects a status change of the space by comparing two of the space features.

Based on the above, the disclosure provides a method and an apparatus for space status detection based on acoustic chirp signals. The acoustic chirp signals are sequentially transmitted into the space at the different time points. Then, the acoustic waves changed in the space from the acoustic chirp signals are sequentially received to generate the acoustic spatial response signals, and the space features of the space are obtained based on the acoustic spatial response signals. A status change of the space is detected by comparing two of the space features. Since sounds serve as a sensing medium in the disclosure, a conventional full-band speaker and a microphone may serve as the transmitting and receiving devices. Accordingly, the cost for the detection apparatus is reduced. Besides, since the acoustic waves may be received after multiple times of reflection in the space (particularly an indoor space), signal blind angle may be reduced and the directivity of signal transmission and reception is also dealt with. Moreover, the disclosure compares the space features of the acoustic spatial responses received at different time points. Thus, the detection may be promptly initiated without spending time on model training. Besides, the correlation between the acoustic spatial responses and the background noises is able to be effectively reduced.

Several exemplary embodiments accompanied with figures are described in detail below to further describe the disclosure in details.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.
FIG. 1 is a schematic block view illustrating an apparatus for space status detection based on acoustic chirp signals according to an embodiment of the disclosure.
FIG. 2A is a spectrogram of an acoustic chirp signal according to an embodiment of the disclosure.
FIG. 2B is a spectrogram of a composite acoustic chirp signal according to an embodiment of the disclosure.
FIG. 3A is a spectrogram of indoor acoustic spatial response signals in an empty room according to an embodiment of the disclosure.
FIG. 3B is a spectrogram of indoor acoustic spatial response signals in a room with objects arranged or people staying in the room according to an embodiment of the disclosure.
FIG. 4 is a schematic block view illustrating a space feature generator according to the embodiment of FIG. 1 of the disclosure.
FIG. 5A is a diagram illustrating an energy distribution of acoustic spatial response signals according to an embodiment of the disclosure.
FIG. 5B is a diagram illustrating the acoustic spatial response signals corresponding to the embodiment of FIG. 5A.
FIG. 6 is a diagram illustrating a response sample section corresponding to the embodiment of FIG. 5B.
FIG. 7 is a spectrogram of audio chirp data and effective signals according to an embodiment of the disclosure.
FIG. 8 is a spectrogram of audio chirp data and effective signals according to another embodiment of the disclosure.
FIG. 9 is a schematic view illustrating comparing space features sequentially obtained according to an embodiment of the disclosure.
FIG. 10 is a histogram illustrating results of space status comparison according to an embodiment of the disclosure.
FIG. 11 is a flowchart illustrating a method for space status detection based on acoustic chirp signals according to an embodiment of the disclosure.
FIG. 12 is a flowchart illustrating a method for space status detection based on acoustic chirp signals according to another embodiment of the disclosure.

### DETAILED DESCRIPTION OF DISCLOSED EMBODIMENTS

Descriptions of the disclosure are given with reference to the exemplary embodiments illustrated with accompanied drawings, wherein same or similar parts are denoted with same reference numerals. In addition, whenever possible, identical or similar reference numbers stand for identical or similar elements in the figures and the embodiments. The language used to describe the directions such as up, down, left, right, front, back or the like in the reference drawings is regarded in an illustrative rather than in a restrictive sense. Thus, the language used to describe the directions is not intended to limit the scope of the disclosure.

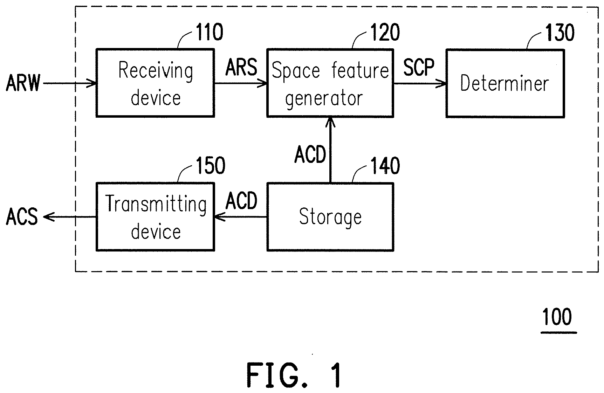

FIG. 1 is a schematic block view illustrating an apparatus for space status detection based on acoustic chirp signals according to an embodiment of the disclosure. Referring to FIG. 1, an apparatus 100 for space status detection based on acoustic chirp signals detects a status change in a space, such as movement, entering, or exiting of people in the space. In the embodiment, the apparatus 100 for space status detection includes a receiving device 110, a space feature generator 120, a determiner 130, a storage 140, and a transmitting device 150. The transmitting device 150 repetitively transmits an acoustic chirp signal ACS into a space (not shown) at a plurality of different time points. A transmitting time interval of the time points may be a constant value or a variable value. For example, the transmitting device 150 may periodically or arbitrarily transmit the acoustic chirp signal ACS. The disclosure does not intend to impose a limitation on this regard. The receiving device 110 sequentially receives acoustic waves ARW (referred to as acoustic spatial responses ARW in the following) that are the successively transmitted acoustic chirp signals ACS varied in the space. In addition, the received acoustic spatial responses ARW are respectively and sequentially converted into acoustic spatial response signals ARS. A change in the space includes a reflection of the acoustic chirp signal ACS in the space, for example. The space feature generator 120 is coupled to the receiving device 110 to receive the acoustic spatial response signals ARS and calculates a plurality of space features SCP of the space based on the acoustic spatial response signals ARS. The determiner 130 is coupled to the space feature generator 120 to receive the space features SCP and detects a status change of the space by comparing two of the space features SCP. For example, the determiner 130 may detect the status change of the space by comparing two space features SCP obtained successively. In other words, the determiner 130 may detect a status change of the space by comparing the currently received space feature SCP and the next or previous space feature SCP. The storage 140 stores a plurality of audio chirp data ACD, and is coupled to the space feature generator 120.

It should be noted that, in other embodiments, the apparatus 100 for space status detection may not include the storage 140 and/or the transmitting device 150. People having ordinary skills in the art may make a proper choice based on actual needs or a design, and the disclosure is not limited thereto.

In the embodiment, the transmitting device 150 may be a speaker, such as a full-band speaker, instead of a tweeter with a special specification. In addition, the transmitting device 150 may be coupled to the storage 140, for example. The storage 140 stores the audio chirp data ACD. Therefore, the transmitting device 150 may transmit the acoustic chirp signals ACS into the space based on at least one of the audio chirp data ACD of the storage 140. The receiving device 110 may be a microphone, such as an omni-directional microphone device. However, the disclosure is not limited thereto. Any component capable of making and receiving a sound may respectively serve as the receiving device 110 and the transmitting device 150 in the embodiment of the disclosure. Besides, the receiving device 110 and the transmitting device 150 may be disposed to the same device or separately disposed at different locations. The disclosure does not intend to impose a limitation on this regard.

In the embodiment of the disclosure, a speaker and a microphone disposed in a home electronic appliance or a general electronic apparatus may serve as transmitting and receiving devices for impulse signals. Accordingly, the cost of the apparatus is reduced. In addition, since acoustic waves may be received after multiple times of reflection in an indoor space, signal blind angle may be reduced and the directivity of signal transmission and reception is also dealt with.

In the embodiment, the space feature generator 120 and the determiner 130 may be implemented as hardware, firmware, or software or machine executable programming codes stored in a memory and loaded and executed by a processor or a microprocessor. If the space feature generator 120 and the determiner 130 are implemented as hardware or circuits, each of the space feature generator 120 and the determiner 130 can be implemented by a circuit chip, or can be partially or entirely implemented by a single integrated circuit chip. Nevertheless, it should be understood that the disclosure is not limited thereto. As examples, the memory may be an optical disc, a random access memory, a read only memory, a flash memory, a floppy disk drive, a hard drive, or a magnetic-optical drive, or a remote recording medium or a none-temporary machine readable medium that can be accessed through a network.. Examples of the hardware include a general-purpose computer, an application-specific integrated circuit (ASIC) or a field programmable gate array (FPGA). When the aforementioned hardware accesses and executes the software or machine-executable programming codes, the hardware may include a memory device. Examples of the memory device include a random access memory, a read only memory, a flash memory, a flash drive, etc., which is used for storing the aforementioned software or the machine executable program codes.

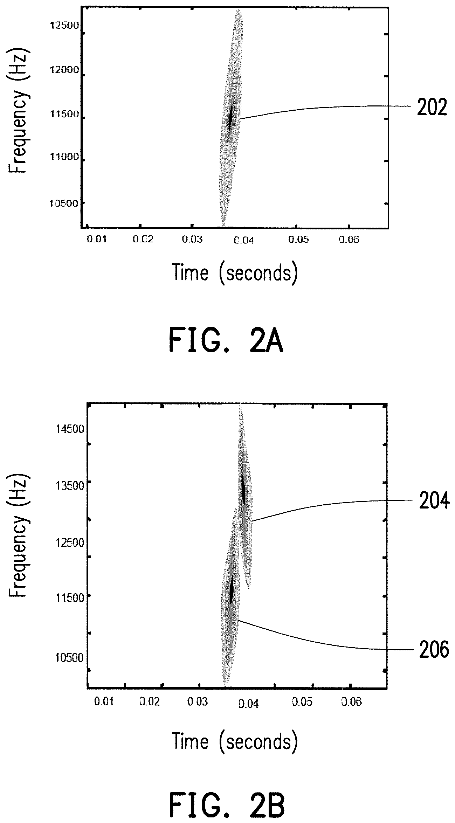

Referring to FIG. 2A, FIG. 2A is a spectrogram of an acoustic chirp signal according to an embodiment of the disclosure. In the embodiment, the acoustic chirp signal ACS transmitted by the transmitting device 150 may be an impulse having a duration of 7.5 milliseconds (ms), for example. It should be noted that the acoustic chirp signal ACS is an audible sound signal whose frequency ranges from about 20Hz to 20kHz. In an embodiment, the frequency of the acoustic chirp signal ACS is in a range from 9kHz to 18kHz. A maximum frequency of a frequency band interval 202 of the acoustic chirp signal ACS is referred to as a frequency upper bound, and a minimum frequency of the frequency band interval 202 of the acoustic chirp signal ACS is referred to as a frequency lower bound. The frequency of the acoustic chirp signal ACS may vary continuously with time within a range from the frequency upper bound to the frequency lower bound, as shown in FIG. 2A. In other embodiments, within the frequency band interval 202, the acoustic chirp signal ACS may also monotonically increase from the frequency lower bound to the frequency upper bound or monotonically decrease from the frequency upper bound to the frequency lower bound. In addition, the acoustic chirp signal ACS may also be a composite acoustic chirp signal formed by combining a plurality of frequency bands. Referring to an embodiment shown in FIG. 2B, FIG. 2B is a spectrogram of a composite acoustic chirp signal according to an embodiment of the disclosure. The acoustic chirp signal ACS is a composite acoustic chirp signal formed by superposing a frequency band 204 and a frequency band 206. However, the disclosure is not limited thereto.

In the embodiment, an excitation signal having a higher frequency and a narrower bandwidth (9kHz to 18kHz) is adopted, so as to use a lower sound pressure as an excitation source. Moreover, with the higher frequency and the narrower bandwidth, a correlation between the acoustic spatial responses and background noises may be effectively decreased by increasing variation of the excitation sound source within a short period of time as well as variability of the acoustic spatial responses.

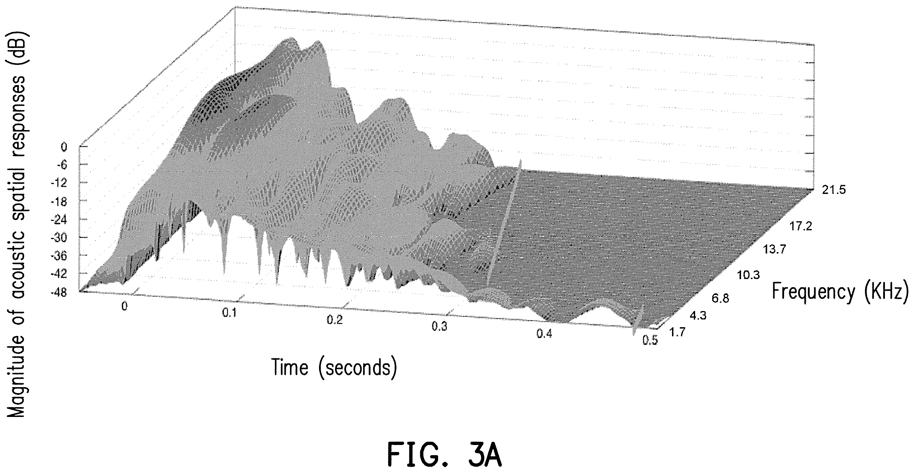

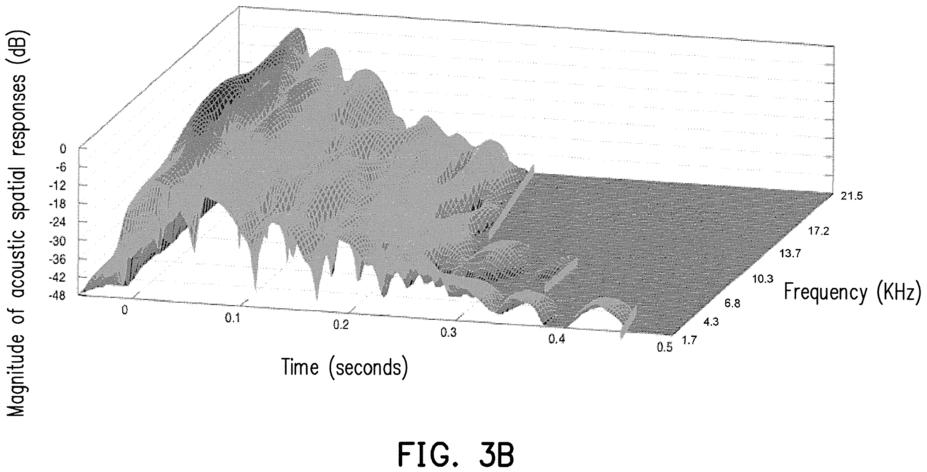

In addition, the space where the apparatus 100 for space status detection is disposed may be an indoor space, and the acoustic spatial responses ARW received by the receiving device 110 may be impulse responses of the impulses in the space. For example, corresponding reverberations may be generated by reflection of the acoustic waves in the space interacting with an object, a ground, a wall surface, and a roof in the space. However, the disclosure does not intend to limit changes in the space. It should be noted that the acoustic spatial responses ARW in the indoor space is different along with the size of the indoor space and variation of the article arrangement therein. Examples are as shown in FIGs. 3A to 3B. FIG. 3A is a spectrogram of indoor acoustic spatial response signals in an empty room according to an embodiment of the disclosure. FIG. 3B is a spectrogram of indoor acoustic spatial response signals in a room with objects arranged or people staying in the room according to an embodiment of the disclosure. As shown in FIGs. 3A and 3B, the impulse responses of the impulses in the indoor space may vary as the size of the indoor space, the objects arranged in the space, or people present in the space differ. Therefore, features of the acoustic spatial responses ARW are able to reflect status characteristics of the indoor space. In addition, the acoustic spatial response signals ARS are electronic signals converted from the acoustic spatial responses ARW.

In an embodiment, the ambient noises are broadband and slowly vary through time. Thus, reverberations at close time points do not differ significantly from each other. However, when people move in the space or an event occurs in the space, making the status of the space change drastically, a difference between reverberation samples at close time points may be more significant than the difference between reverberations at close time points caused by the ambient noises. Accordingly, in an embodiment of the disclosure, two of the space features SCP corresponding to different time points are compared to detect a status change in the space. The detection is resistant of full-band noises in an external environment and able to effectively reduce the correlation between the background noises and the acoustic spatial responses. In addition, the detection has a shorter response time and may be promptly initiated without spending time on model-building. The efficiency of use is consequently increased.

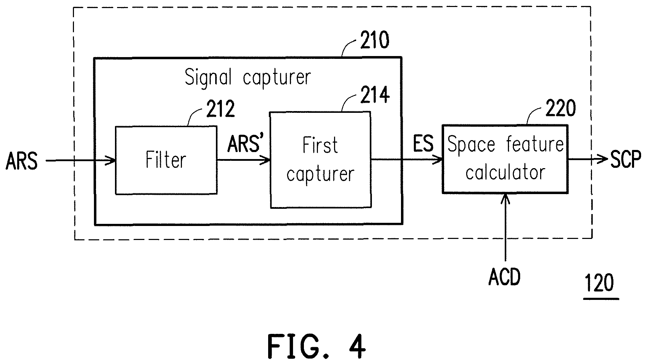

FIG. 4 is a schematic block view illustrating a space feature generator according to the embodiment of FIG. 1 of the disclosure. The space feature generator 120 includes a signal capturer 210 and a space feature calculator 220. The signal capturer 210 receives the acoustic spatial response signal ARS from the receiving device 110 and captures an effective signal ES in the acoustic spatial response signal ARS. The space feature calculator 220 is coupled to the signal capturer 210 to receive the effective signal ES, and generates the corresponding space feature SCP based on the effective signal ES.

In an embodiment, in order to facilitate computing efficiency of the space feature calculator 220, the signal capturer 210 may capture only the effective signal ES in the acoustic spatial response signal ARS. The signal capturer 210 includes a filter 212 and a first capturer 214. The filter 212 is coupled to the receiving device 110 to receive and filter the acoustic spatial response signal ARS. The filter 212 is a bandpass filter, for example, or other similar components also capable of filtering. People having ordinary skills in the art may make suitable modification accordingly based on needs, and the disclosure does not intend to impose a limitation on this regard. The first capturer 214 is coupled to the filter 212, receives a filtered acoustic spatial response signal ARS', and then captures the effective signal ES from the filtered acoustic spatial response signal ARS'.

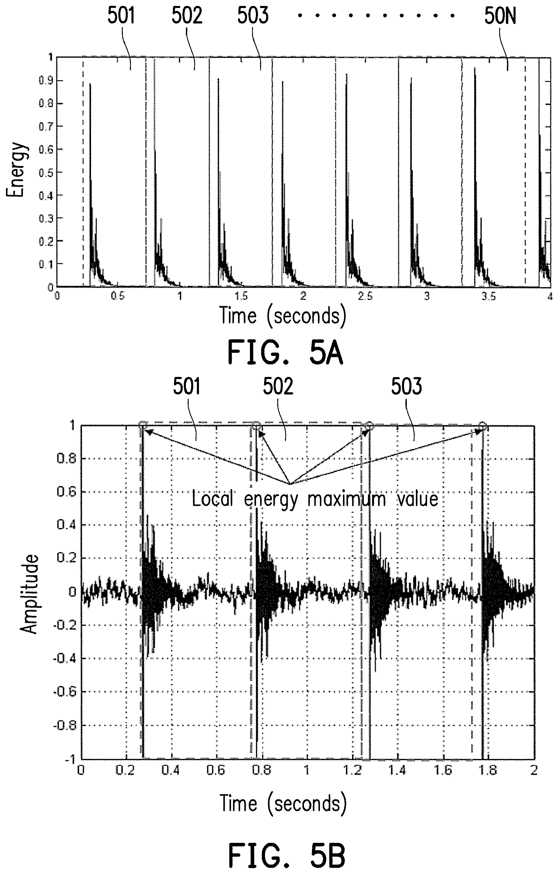

For ease of description, capturing the effective signal ES from the filtered acoustic spatial response signal ARS' is described with reference to the acoustic spatial responses in an embodiment of the disclosure. Referring to FIGs. 1, 5A, and 5B, FIG. 5A is a diagram illustrating an energy distribution of acoustic spatial response signals according to an embodiment of the disclosure, and FIG. 5B is a diagram illustrating the acoustic spatial response signals corresponding to the embodiment of FIG. 5A.

The first capturer 214 divides the filtered acoustic spatial response signal ARS' into a plurality of frames and calculates feature data of the frames. The feature data include an energy distribution of each of the frames. The energy may be calculated by summing up squared values of amplitudes of all signals in the frame. As shown in FIG. 5A, based on a temporal sequence, the receiving device 110 sequentially receives several of the acoustic spatial response signals ARS corresponding to frames 501, 502, 503...to 50N. Based on energy distribution data of the frames (the frames 501, 502, 503...to 50N), an initial point of each of the frames may be determined by looking for a local energy maximum value, for example. In other words, magnitudes of energies received at different time points are compared, so as to set a time point corresponding to the maximum energy value as the initial point of each of the frames. It should be noted that the disclosure does not intend to impose a limitation on how the initial point is determined or chosen.

Based on a result of comparison (e.g., a result of comparison on the magnitudes of energies) and a transmitting time interval of the acoustic chirp signals ACS, the first capturer 214 may capture a desired response sample section from the filtered acoustic spatial response signal ARS'. Referring to FIG. 5B and taking a frame 501 as an example, in the embodiment, if a transmitting time interval between the acoustic chirp signal ACS corresponding to the frame 501 and the acoustic chirp signal ACS corresponding to a next frame 502 is 0.5 seconds, the first capturer 214 may set the energy maximum value in the frame 501 as the initial point and capture a signal within following 0.5 seconds (i.e., the transmitting time interval) as the response sample section of the frame 501. In another embodiment, the signal capturer 210 may not include the filter 212. The first capturer 214 may divide the acoustic spatial response signal ARS into a plurality of frames, calculate feature data of the frames, and capture the desired response sample sections from the acoustic spatial response signal ARS based on a result of comparison on the feature data (e.g., a result of comparison on the magnitudes of energies) and the transmitting time interval of the acoustic chirp signals ACS.

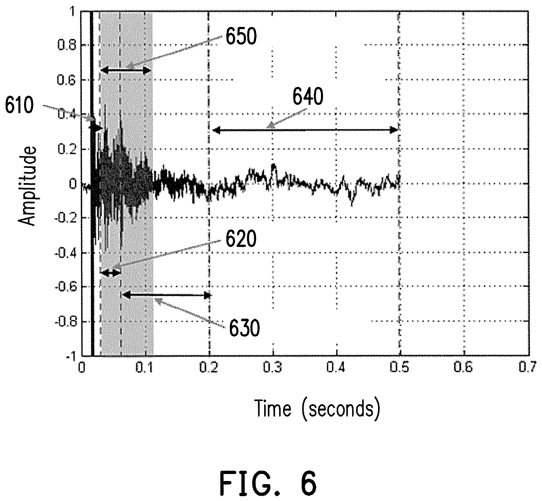

Referring to FIG. 6 for further descriptions, FIG. 6 is a diagram illustrating a response sample section corresponding to the embodiment of FIG. 5B. The response sample section includes a direct sound section 610, reflection sound sections 620 and 630 (i.e., the early reflection sound section 620 and the late reflection sound section 630), and a background noise 640. A direct sound refers to a signal without being reflected in the space and suffering from a minimum energy loss. Thus, the direct sound may have a greater amplitude. A reflection sound refers to a signal undergoing once or multiple times of reflection. In an embodiment, the first capturer 214 may filter out the direct sound section 610 or noises in the response sample section to obtain the effective signal ES.

When the locations of the receiving device 110 and the transmitting device 150 are already known, time required for the acoustic chirp signal ACS to travel from the transmitting device 150 to the receiving device 110 is able to be calculated, and the time required is set as a preset time period T. In an embodiment, the first capturer 214 filters out a section earlier than the preset time period T in an onset of the response sample section, so as to filter out the direct sound section 610. In other embodiments, the first capturer 214 may also determine whether an absolute value of an amplitude of the response sample section is continuously less than an averaged amplitude of the response sample section or a first preset amplitude for a first preset time period T1, determine a signal before the first preset time period T1 as the direct sound section 610, and remove the signal. The disclosure does not intend to limit how the direct sound section is determined. How the direct sound section is determined may be decided based on the actual design or practical needs.

In the embodiment, the first capturer 214 may further filter out the background noise 640 or a portion of the late reflection sound section 630 of the response sample section, so as to reduce a computing load of the space feature calculator 220. For example, based on a duration of the acoustic chirp signal ACS, such as 7.5ms, the first capturer 214 may filter out a signal after the response sample section starts for 7.5ms (or with addition of a buffer time). Alternatively, based on whether the absolute value of the amplitude of the response sample section is continuously less than the averaged amplitude of the response sample section or a second preset amplitude for a second preset time period T2, a sound sensing signal after the second preset time period T2 is filtered out. The disclosure does not intend to limit on filtering of the background noise 640 and how a portion of the late reflection section 630 is selected. Such settings may be determined based on the actual design or practical needs.

In the embodiment, after the first capturer 214 filters out the direct sound section 610, the background noise 640, and/or a portion of the late reflection sound section 630, a captured effective section 650 is the effective signal ES. In another embodiment, a section after the first capturer 214 filters out the direct sound section 610 is the effective signal ES. In another embodiment, a section after the first capturer 214 filters out the direct sound section 610 and the background noise 640 is the effective signal ES. However, the disclosure is not limited thereto. Which section of the response sample section is filtered out may be determined by the actual design or practical needs.

Referring to FIGs. 1 and 4, in the embodiment, the space feature calculator 220 receives the audio chirp data ACD corresponding to the effective signal ES from the storage 140. The effective signal ES is captured from the acoustic spatial response signal ARS changed in the space from the acoustic chirp signal ACS, and the acoustic chirp signal ACS is transmitted by the transmitting device 150 based on the audio chirp data ACD. Based on the audio chirp data ACD, the space feature calculator 220 may obtain spectrogram data after the corresponding acoustic chirp signal ACS is converted into a temporal-spectral domain. In an embodiment, the space feature calculator 220 may receive the audio chirp data ACD from the storage 140, and convert the audio chirp data ACD into the temporal-spectral domain, so as to obtain the spectrogram data as shown in FIGs. 2A and 2B, for example. The space feature calculator 220 receives the effective signal ES from the first capturer 214, and converts the effective signal ES into spectrogram data. The acoustic chirp signal ACS and the effective signal ES may undergo a Fourier transformation, such as a two-dimensional fast Fourier transformation (FFT)) to obtain the spectrogram data.

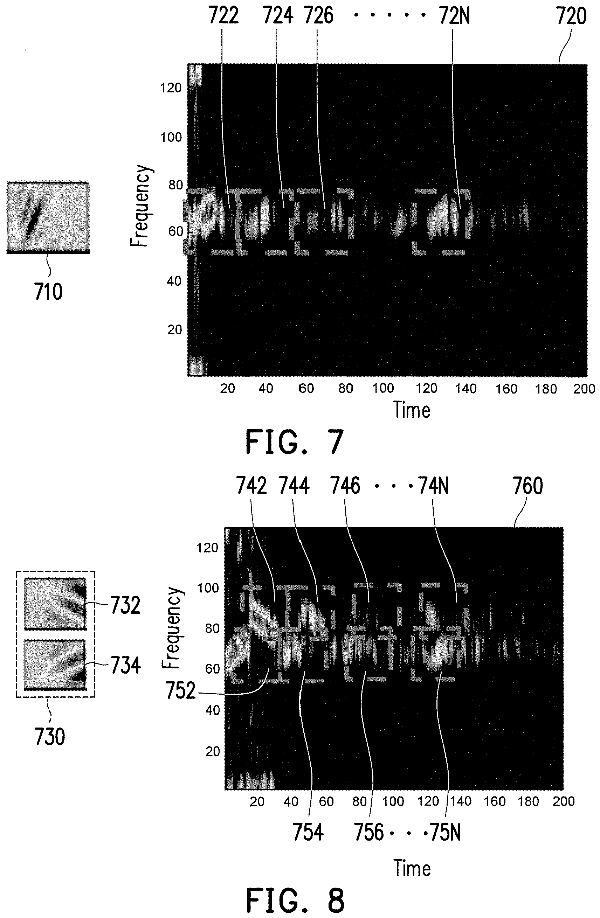

Referring to FIG. 7, FIG. 7 is a spectrogram of audio chirp data and effective signals according to an embodiment of the disclosure. In the embodiment, audio chirp spectrogram data 710 are spectrogram data corresponding to the acoustic chirp signal ACS, such as spectrogram data after the corresponding audio chirp data ACD are converted into the temporal-spectral domain or spectrogram data when the acoustic chirp signal ACS corresponding to the audio chirp data ACD is converted into the temporal spectral domain. Effective signal spectrogram data 720 are a result after the effective signal ES is converted into the temporal-spectral domain. The space feature calculator 220 may firstly compare the effective signal spectrogram data 720 with the audio chirp spectrogram data 710, and then capture spectrogram blocks corresponding to the audio chirp spectrogram data 710 from the effective signal spectrogram data 720, such as a spectrogram block 722, 724, 726, or 72N, as a result of comparison. Then, the spectrogram block is matched with the audio chirp spectrogram data 710 to calculate a quantitative value of similarity between the spectrogram block and the audio chirp spectrogram data 710 as the space feature SCP. In other words, the space feature calculator 220 performs convolution on the spectrogram block 722, 724, 726, or 72N and the audio chirp spectrogram data 710 respectively, and results of convolution are the space features SCP.

FIG. 8 is a spectrogram of audio chirp data and effective signals according to another embodiment of the disclosure. The step and principle of the embodiment of FIG. 8 are similar to those of FIG.7. Therefore, details in these regards will not be repeated in the following. In the embodiment shown in FIG. 8, the acoustic chirp signal ACS is transmitted based on composite audio chirp data. Audio chirp spectrogram data 730 are formed by combining audio chirp spectrogram data 732 and audio chirp spectrogram data 734. The space feature calculator 220 may respectively compare effective signal spectrogram data 760 with the audio chirp spectrogram data 732 and the audio chirp spectrogram data 734, further capture a spectrogram block 742, 744, 746, or 74N corresponding to the audio chirp spectrogram data 732 as well as a spectrogram block 752, 754, 756, or 75N corresponding to the audio chirp spectrogram data 734 from the effective signal spectrogram data 760, and perform matching, so as to calculate the space feature SCP.

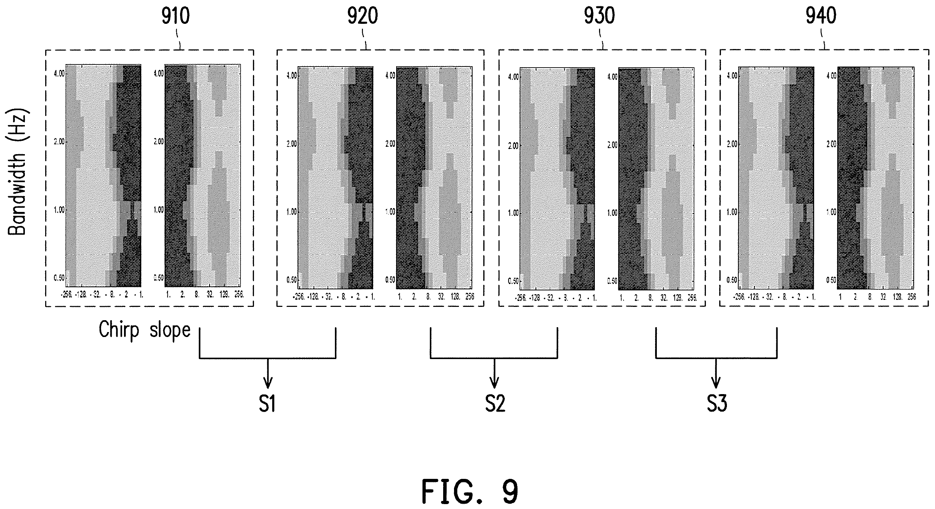

Referring to FIGs. 1 and 9, FIG. 9 is a schematic view illustrating comparing space features sequentially obtained according to an embodiment of the disclosure. In the embodiment, the receiving device 110 may respectively receive the acoustic spatial response signals ARS at four different but adjacent time points, and the space feature generator 120 may calculate corresponding space features 910, 920, 930, and 940. The space features 910, 920, 930, and 940 respectively represent space statuses measured at four different but successive time points. Results of each of the space features 910, 920, 930, and 940 on a positive horizontal axis and a negative horizontal axis are respectively shown in two diagrams arranged on the left and on the right. The space features 910, 920, 930, and 940 of FIG. 9 are merely shown as an example, and shall not be construed as limitations on the disclosure. The determiner 130 receives the space features 910, 920, 930, and 940 from the space feature generator 120, calculates difference data with respect to a previous or next space feature, and calculates difference features S1, S2, and S3 based on the difference data. Specifically, difference data are obtained by subtracting the previously received space feature 910 from the space feature 920. The difference data may be array data. Then, the difference feature S1 is calculated based on the difference data. By subtracting the space feature 920 from the space feature 930 received after the space feature 920, difference data are obtained so as to calculate the difference feature S2. By subtracting the space feature 930 from the space feature 940 received before the space feature 930, difference data are obtained so as to calculate the difference feature S3. Calculation of the difference feature based on the difference data includes, for example, 2-norm calculation or other calculations. The disclosure does not intend to limit on how the difference feature is calculated.

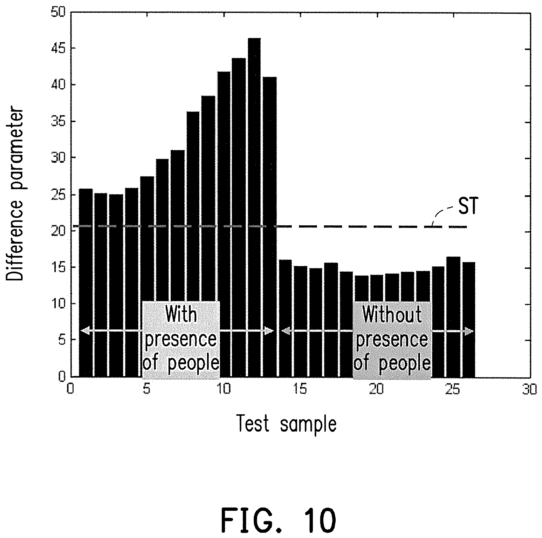

Referring to FIG. 10, FIG. 10 is a histogram illustrating results of space status comparison according to an embodiment of the disclosure. The determiner 130 may detect whether the status of the space is changed based on the difference feature (e.g., the difference features S1, S2, and S3 in the embodiment of FIG. 9) and a threshold value ST. The threshold value ST may be a preset value or a value determined based on a previous status of the space or other conditions. The disclosure does not intend to impose a limitation on this regard. The determiner 130 compares the difference feature with the threshold value ST. If the difference feature is greater than the threshold value ST, the status of the space is changed. Alternatively, if the difference feature is not greater than the threshold value ST, the status remains normal, and there is no disturbance, such as entering, exiting, or moving of people, in the space being detected.

Therefore, in the embodiment, by receiving the acoustic spatial responses changed in the space from the acoustic chirp signals transmitted periodically or arbitrarily, obtaining the space features of the space based on the acoustic spatial responses, and comparing the space features of the acoustic spatial responses received at different time points to detect the change of the status of the space, the correlation between the acoustic spatial responses and the background noise is decreased. Thus, a difference between household ambient noises and a disturbance event (e.g., entering and exiting of people) in the space becomes distinguishable under the presence of the background noises.

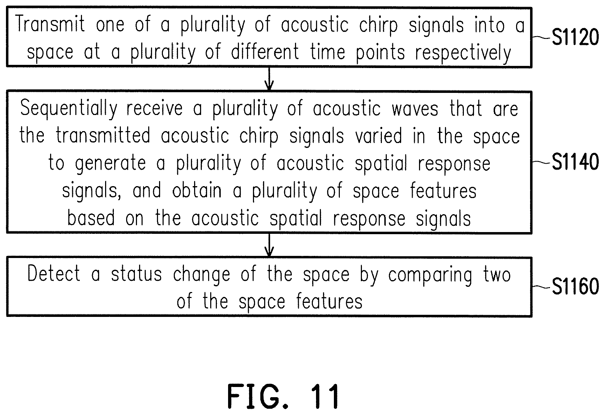

Referring to FIG. 11, FIG. 11 is a flowchart illustrating a method for space status detection based on acoustic chirp signals according to an embodiment of the disclosure. The method for space status detection based on the acoustic chirp signals of the embodiment is suitable for any embodiment shown in FIGs. 1 to 10, and includes steps as follows. First of all, at Step S1120, each of a plurality of acoustic chirp signals is transmitted into a space at a plurality of different time points. In addition, a transmitting time interval of the time points may be a constant value or a variable value. Then, at Step S1140, a plurality of acoustic waves that are the transmitted acoustic chirp signals varied in the space are sequentially received to generate a plurality of acoustic spatial response signals, and a plurality of space features of the space are obtained based on the acoustic spatial response signals. Then, at Step S1160, a status change of the space is detected by comparing two of the space features. In addition, sufficient teachings, suggestions and details of implementation for the method for space status detection based on acoustic chirp signals of the embodiment are already provided in the descriptions of the embodiments of FIGs. 1 to 10. Thus, details in this regard will not be repeated in the following.

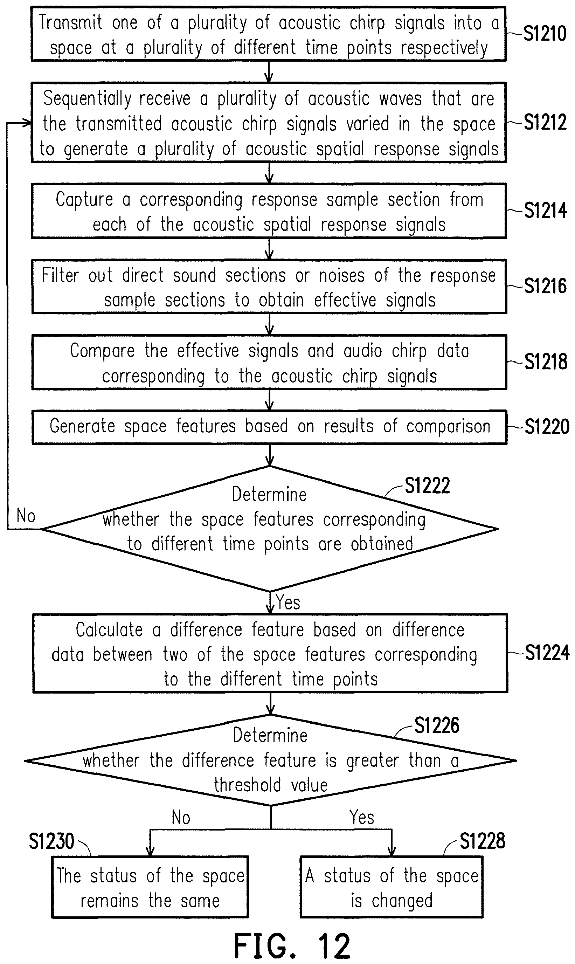

Referring to FIG. 12, FIG. 12 is a flowchart illustrating a method for space status detection based on acoustic chirp signals according to another embodiment of the disclosure. The method for space status detection based on the acoustic chirp signals of the embodiment is suitable for any embodiment shown in FIGs. 1 to 10, and includes steps as follows. First of all, at Step S1210, each of a plurality of acoustic chirp signals is transmitted into a space at a plurality of different time points. For example, a first acoustic chirp signal is transmitted at a first time point, a second acoustic chirp signal is transmitted at a second time point, and so on so forth. Then, at Step S1212, a plurality of acoustic waves that are the transmitted acoustic chirp signals varied in the space are sequentially received to generate a plurality of acoustic spatial response signals. For example, an acoustic wave changed in the space from the first acoustic chirp signal is received to generate a first acoustic spatial response signal, and an acoustic wave changed in the space from the second acoustic chirp signal is received to generate a second acoustic spatial response signal, and so on so forth. At Step S1214, a corresponding response sample section is captured from each of the acoustic spatial response signals. For example, a corresponding first response sample section is captured from the first acoustic spatial response signal, and a corresponding second response sample section is captured from the second acoustic spatial response signal, and so on so forth. At Step 1216, direct sound sections or noises of the response sample sections are filtered out to obtain effective signals. For example, a direct sound section or noises of the first response sample section are filtered out to obtain a first effective signal, and a direct sound section or noises of the second response sample section are filtered out to obtain a second effective signal, and so on so forth. At Step S1218, the effective signals and audio chirp data corresponding to the acoustic chirp signals are compared. For example, the first effective signal and first audio chirp data corresponding to the first acoustic chirp signal are compared, the second effective signal and second audio chirp data corresponding to the second acoustic chirp signal are compared, and so on so forth. In addition, the first audio chirp data and the second audio chirp data are the same audio chirp data, for example. At Step S1220, based on results of comparison, space features are generated. For example, a first space feature is generated based on a result of comparison between the first effective signal and the first audio chirp data, and a second space feature is generated based on a result of comparison between the second effective signal and the second audio chirp data, and so on so forth. At Step S1222, whether the space features corresponding to different time points are obtained is determined. For example, whether the second space feature corresponding to a time point different to a time point that the first space feature corresponds to is determined. If it is determined that the space features corresponding to different time points are obtained, Step S1224 is carried out. If it is determined that the space features corresponding to different time points are not obtained, Step S 1212 is carried out again to obtain another acoustic spatial response signal. For example, the second space feature may be the next space feature after the first space feature. Then, at Step S1224, a difference feature is calculated based on difference data between two of the space features corresponding to different time points. For example, the difference feature is calculated based on difference data between the first space feature and the second space feature. At Step S1226, whether the difference feature is greater than a threshold value is determined. The threshold value may be set with a default setting or may be variable according to different conditions. When the difference feature is greater than the threshold value, Step S1228 is carried out and it is determined that the status of the space is changed. When the difference feature is not greater than the threshold value, Step S1230 is carried out and it is determined that the status of the space remains unchanged.

In addition, sufficient teachings, suggestions and details of implementation for the method for space status detection based on acoustic chirp signals of the embodiment are already provided in the descriptions of the embodiments of FIGs. 1 to 10. Thus, details in this regard will not be repeated in the following.

In view of the foregoing, the disclosure provides a method and an apparatus for space status detection based on acoustic chirp signals. One of the acoustic chirp signals is transmitted into the space at the different time points. Then, the acoustic waves changed in the space from the acoustic chirp signals are sequentially received to generate the acoustic spatial response signals, and the space features of the space are obtained based on the acoustic spatial response signals. The status change of the space is detected by comparing two of the space features. Since the acoustic chirp signals serve as a sensing medium in the disclosure, a conventional full-band speaker and a microphone may serve as the transmitting and receiving devices. Accordingly, the cost for the detection apparatus is reduced. Besides, since the acoustic waves may be received after multiple times of reflection in the space (particularly an indoor space), signal blind angle may be reduced and the directivity of signal transmission and reception is also dealt with. In addition, since the acoustic chirp signals are used in the disclosure, the excitation acoustic source may be changed within a short period of time, thereby making reflection sounds more variable. Moreover, the disclosure compares the space features of the acoustic spatial responses received at different time points. Thus, the detection may be promptly initiated without spending time on model training. Besides, the correlation between the acoustic spatial responses and the background noises is able to be effectively reduced. Consequently, the efficiency of use is increased.

## Claims

1. A method for space status detection, **characterised in that**, the space status detection is based on acoustic chirp signals (ACS) and the method comprises:
transmitting one of a plurality of acoustic chirp signals (ACS) into a space at a plurality of different time points respectively;
sequentially receiving a plurality of acoustic waves (ARW) that are the transmitted acoustic chirp signals (ACS) varied in the space to generate a plurality of acoustic spatial response signals (ARS), and obtaining a plurality of space features (SCP, 910, 920, 930, 940) of the space based on the acoustic spatial response signals (ARS); and
detecting a status change of the space by comparing two of the space features (SCP, 910, 920, 930, 940).

2. The method as claimed in claim 1 **characterised in that** the two of the space features (SCP, 910, 920, 930, 940) are two space features (SCP, 910, 920, 930, 940) corresponding to two acoustic chirp signals (ACS) of the acoustic chirp signals (ACS) corresponding to two acoustic waves (ARW) of the acoustic waves (ARW) received at two sequent time points.

3. The method as claimed in claim 1 **characterised in that** the step of obtaining the space features (SCP, 910, 920, 930, 940) of the space based on the acoustic spatial response signals (ARS) comprises:
capturing a plurality of effective signals (ES) in the acoustic spatial response signals (ARS); and
generating the space features (SCP, 910, 920, 930, 940) based on the effective signals (ES).

4. The method as claimed in claim 3 **characterised in that** the step of capturing the effective signals (ES) in the acoustic spatial response signals (ARS) comprises:
filtering and dividing the acoustic spatial response signals (ARS) into a plurality of frames (501, 502, 503, 50N);
calculating a plurality of feature data of the frames (501, 502, 503, 50N), wherein each of the feature data comprises energy of a corresponding frame of the frames (501, 502, 503, 50N); and
capturing the effective signals (ES) by analyzing the feature data.

5. The method as claimed in claim 4 **characterised in that** the step of capturing the effective signals (ES) by analyzing the feature data comprises:
capturing a plurality of response sample sections from the acoustic spatial response signals (ARS) based on a result of comparison of the feature data and a transmitting time interval of the acoustic chirp signals (ACS), wherein each of the response sample sections comprises a direct sound section (610) and a reflection sound section (620, 630), and the transmitting time interval of the time points is a constant value or a variable value, and
filtering out the direct sound section (610) or noises of each of the response sample sections to obtain the effective signals (ES),
wherein filtering out the direct sound section (610) of each of the respective response sample section comprises:
filtering out a section earlier than a preset time period in an onset of each of the response sample sections.

6. The method as claimed in claim 3 **characterised in that** the step of generating the space features (SCP, 910, 920, 930, 940) based on the effective signals (ES) comprises:
generating the space features (SCP, 910, 920, 930, 940) based on a plurality of results of comparison between the effective signals (ES) and at least one audio chirp data (ACD) corresponding to the acoustic chirp signals (ACS).

7. The method as claimed in claim 1 **characterised in that** the step of detecting the status change of the space by comparing two of the space features (SCP, 910, 920, 930, 940) comprises:
calculating a difference feature (S1, S2, S3) based on difference data between the two of the space features (SCP, 910, 920, 930, 940); and
detecting whether the status of the space is changed based on the difference feature (S1, S2, S3) and a threshold value (ST).

8. The method as claimed in claim 1 **characterised in that** frequencies of the acoustic chirp signals (ACS) vary continuously with time between a frequency lower bound and a frequency upper bound of a frequency band interval (202).

9. The method as claimed in claim 1 **characterised in that** within a frequency band interval (202), frequencies of the acoustic chirp signals (ACS) monotonically increase from a first frequency lower bound to a first frequency upper bound or monotonically decrease from a second frequency upper bound to a second frequency lower bound.

10. The method as claimed in claim 1 **characterised in that** the acoustic chirp signals (ACS) are composite acoustic chirp signals formed by combining a plurality of frequency bands (204, 206).

11. The method as claimed in claim 1 **characterised in that** frequencies of the acoustic chirp signals (ACS) are within a range from 9kHz to 18kHz.

12. The method as claimed in claim 1 **characterised in that** the space is an indoor space, and the acoustic chirp signals (ACS) are audible sound signals.

13. An apparatus for space status detection (100), **characterised in that**, the space status detection is based on acoustic chirp signals (ACS) and the apparatus (100) comprises:
a receiving device (110), sequentially receiving a plurality of acoustic waves (ARW) that are a plurality of acoustic chirp signals (ACS) varied in a space to generate a plurality of acoustic spatial response signals (ARS), wherein each of the acoustic chirp signals (ACS) is respectively transmitted into the space at a plurality of different time points;
a space feature generator (120), coupled to the receiving device (110) to receive the acoustic spatial response signals (ARS) and calculating a plurality of space features (SCP, 910, 920, 930, 940) of the space based on the acoustic spatial response signals (ARS); and
a determiner (130), coupled to the space feature generator (120) to receive the space features (SCP, 910, 920, 930, 940) and detecting a status change of the space by comparing two of the space features (SCP, 910, 920, 930, 940).

14. The apparatus as claimed in claim 13 **characterised in that** the two of the space features (SCP, 910, 920, 930, 940) compared by the determiner (130) are two space features (SCP, 910, 920, 930, 940) corresponding to two adjacent acoustic chirp signals (ACS) of the acoustic chirp signals (ACS).

15. The apparatus as claimed in claim 13 **characterised in that** the space feature generator (120) comprises:
a signal capturer (210), capturing a plurality of effective signals (ES) in the acoustic spatial response signals (ARS); and
a space feature calculator (220), coupled to the signal capturer (210) to receive the effective signals (ES) and generating the space features (SCP, 910, 920, 930, 940) based on the effective signals (ES).

16. The apparatus as claimed in claim 15 **characterised in that** the signal capturer (210) comprises:
a filter (212), coupled to the receiving device (110) to receive the acoustic spatial response signals (ARS) and filtering the acoustic spatial response signals (ARS); and
a first capturer (214), coupled to the filter (212) to receive the filtered acoustic spatial response signals (ARS'), dividing the acoustic spatial response signals (ARS) into a plurality of frames (501, 502, 503, 50N), calculating a plurality of feature data of the frames (501, 502, 503, 50N), and capturing the effective signals (ES) by analyzing the feature data,
wherein each of the feature data comprises energy of a corresponding frame of the frames (501, 502, 503, 50N).

17. The apparatus as claimed in claim 16 **characterised in that** the first capturer (214) filters out a direct sound section (610) or noises of each of a plurality of response sample sections to obtain the effective signals (ES),
wherein the response sample sections are captured from the acoustic spatial response signals (ARS) based on a result of comparison of the feature data and a transmitting time interval of the acoustic chirp signals (ACS), wherein each of the response sample sections comprises the direct sound section (610) and a reflection sound section (620, 630), and the transmitting time interval of the time points is a constant value or a variable value,
wherein the first capturer (214) filters out the direct sound section (610) by filtering out a section earlier than a preset time period in an onset of each of the response sample sections.

18. The apparatus as claimed in claim 15 **characterised in that** the apparatus further comprises:
a storage (140), coupled to the space feature generator (120) and storing a plurality of audio chirp data (ACD) corresponding to the acoustic chirp signals (ACS); and
a transmitting device (150), coupled to the storage (140) to receive at least one of the audio chirp data (ACD) and transmitting the acoustic chirp signals (ACS) into the space based on the audio chirp data (ACD),
wherein the space feature calculator (220) receives the audio chirp data (ACD) corresponding to the acoustic chirp signals (ACS) from the storage (140) and generates the space features (SCP, 910, 920, 930, 940) based on a plurality of results of comparison between the effective signals (ES) and the audio chirp data (ACD) corresponding to the acoustic chirp signals (ACS).

19. The apparatus as claimed in claim 18 **characterised in that** at least one of the audio chirp data (ACD) received from the storage (140) by the transmitting device (150) is at least two of the audio chirp data (ACD), so as to form a composite audio chirp data, and the acoustic chirp signals (ACS) are transmitted into the space based on the composite audio chirp data (ACD).

20. The apparatus as claimed in claim 13 **characterised in that** the determiner (130) calculates a difference feature (S1, S2, S3) based on difference data between the two of the space features (SCP, 910, 920, 930, 940) and determines whether the status of the space is changed based on the difference feature (S1, S2, S3) and a threshold value (ST).
